# EUROPÄISCHE PATENTSCHRIFT

(11) **EP 2 195 981 B1**
(45) Veröffentlichungstag und Bekanntmachung des Hinweises auf die Patenterteilung: **24.07.2013**
(21) Anmeldenummer: 08837154.7
(22) Anmeldetag: 27.09.2008
(51) Int. Cl.: H04L 12/58

(54) **VERFAHREN ZUM ÜBERTRAGEN VON NACHRICHTEN MITTELS MULTIMEDIA MESSAGE SERVICE (MMS)**
METHOD FOR TRANSMITTING MESSAGES USING THE MULTIMEDIA MESSAGE SERVICE (MMS)
PROCÉDÉ DE TRANSMISSION DE MESSAGES AU MOYEN D'UN SERVICE DE MESSAGES MULTIMÉDIA

(30) Priorität: 02.10.2007 DE 102007047281
(43) Veröffentlichungstag der Anmeldung: 16.06.2010
(73) Patentinhaber: Deutsche Telekom AG, 53113 Bonn (DE)
(72) Erfinder: RÖBKE, Matthias, 50859 Köln (DE)
(74) Vertreter: Riebling, Peter
(86) Internationale Anmeldenummer: PCT/EP2008/008241
(87) Internationale Veröffentlichungsnummer: WO 2009/046893

(56) Entgegenhaltungen:
- US-A1- 2006 053 227
- US-A1- 2007 156 817
- "Digital cellular telecommunications system (Phase 2+); Universal Mobile Telecommunications System (UMTS); Multimedia Messaging Service (MMS); Functional description; Stage 2 (3GPP TS 23.140 version 6.14.0 Release 6); ETSI TS 123 140" ETSI STANDARDS, LIS, SOPHIA ANTIPOLIS CEDEX, FRANCE, 1. September 2006 (2006-09-01), XP014036285

## Beschreibung

### Gebiet der Erfindung

Die Erfindung betrifft ein Verfahren zum Übertragen von Nachrichten mittels Multimedia Message Service (MMS), insbesondere ein Verfahren zur Realisierung eines mobilen Email Service auf Basis von MMS.

### Stand der Technik:

In der Mobilfunktechnologie ist es möglich, mit Hilfe des Multimedia Messaging Service (MMS) Daten verschiedener Art, die in verschiedenen Formaten, wie z. B. Bild, Ton, Video etc., codiert sind, über ein (mobiles) Kommunikationsnetz zu übertragen. Unter dem Begriff "Daten" wird jede Art von Information verstanden, die aus einzelnen Bestandteilen oder Elementen zusammengesetzt ist. Diese einzelnen Bestandteile oder Elemente können dabei nach unterschiedlichen Standards aufgebaut, organisiert und/oder codiert sein. Demnach können in diesem Sinne Daten auch eine multimediale Nachricht darstellen, die diverse Elemente verschiedener Standards umfasst. Die hierfür zu Grunde liegende Technik ist in den Publikationen von 3GPP TS 22.140 v6.10.0 "Multimedia Message Service (MMS); Stage 1" und 3GPP TS 23.140 v6.10.0: "Multimedia Message Service (MMS); Functional Description; Stage 2", sowie in den entsprechenden Publikationen der Open Mobile Alliance beschrieben.

Heutige Multimedia Messaging Systeme umfassen als zentrales Element in der Regel einen MMS Relay/Server, der über eine Vielzahl von Schnittstellen mit anderen "Partner"-MMS Relay/Servern, Email Servern, Netzelementen des Mobilfunks (z. B. HLR), etc. verbunden ist und kommuniziert. Eine Übermittlung von E-Mail Nachrichteninhalten über den MMS ist möglich. Beim MMS System eingehende E-Mail Nachrichten werden zur Weiterleitung an eine MMS Benutzeranwendung, im Englischen bezeichnet als MMS Client oder auch MMS User Agent, in ein vom MMS unterstütztes Protokollformat konvertiert und umgekehrt. Diese Konvertierung ist jedoch in vielen Fällen nicht wünschenswert.

In den Publikationen von 3GPP und der Open Mobile Alliance ist des Weiteren die Verwendung einer Anwendungskennung (Application Identifier) beschrieben, welche es erlaubt, dediziert Applikationen auf dem mobilen Endgerät anzusprechen.

Die US 2007/156817 A1 definiert den der Erfindung am nächsten kommenden Stand der Technik und offenbart ein Verfahren zur Übertragung von Nachrichten in einem MMS System gemäß dem Oberbegriff des Patentanspruchs 1.
Die technische Spezifikation ETSI TS 123 140 V6.14.0 Release 6 (2006-09) beschreibt unter anderem den Multimedia Messaging Service MMS.

### Offenbarung der Erfindung

Der vorliegenden Erfindung liegt die Aufgabe zugrunde, ein Verfahren, ein Teilnehmerendgerät und ein Kommunikationssystem anzugeben, das eine Übermittlung von Nachrichten über den Multimedia Message Service an externe Anwendungen erlaubt.

Diese Aufgabe wird erfindungsgemäß durch ein Verfahren mit den Merkmalen des Anspruchs 1, ein Teilnehmerendgerät mit den Merkmalen des Anspruchs 7 und ein Kommunikationssystem mit den Merkmalen des Anspruchs 10 gelöst.

Bevorzugte und vorteilhafte Ausgestaltungen der Erfindung sind in den abhängigen Ansprüchen angegeben.

Das erfindungsgemäße Verfahren zur Übertragung von Nachrichten von einer Nutzeranwendung eines Teilnehmers mit Hilfe des Multimedia Message Service MMS zu einer Nutzeranwendung eines anderen Teilnehmers zeichnet sich dadurch aus, dass die Nachricht in einem Protokollformat einer externen Anwendung vorliegt und als solche durch eine Anwendungskennung gekennzeichnet wird, die zusammen mit der Nachricht übertragen wird. Der Multimedia Message Service wird von der externen Anwendung als Transportsystem zur Übertragung der Nachricht verwendet, indem die Nachricht von einem Netzelement des Multimedia Message Service anhand der Anwendungskennung als solche identifiziert und unverändert über den Multimedia Message Service übertragen und an die externe Anwendung weitergeleitet wird.

Erfindungsgemäß wird der Mechanismus der Verwendung einer Anwendungskennung benutzt, um Nachrichten im Format einer externen Anwendung, vorzugsweise E-Mails, welche mit Hilfe des Multimedia Messaging Services übertragen werden, als solche zu klassifizieren. Somit ist es möglich, E-Mails von generischen Multimedia Nachrichten zu unterscheiden und entsprechend zu behandeln.

Grundlegend für die Erfindung ist, dass, wie in den Standards von 3GPP und der Openmobilealliance beschrieben, der E-Mail Anwendung eine eigenständige Anwendungskennung zugewiesen wird. Diese Anwendungskennung wird dann erfindungsgemäß für die Kommunikation zwischen MMS Relay/Server und dem vorzugsweise mobilen Teilnehmerendgerät bzw. der endgeräteeigenen E-Mail Anwendung verwendet.

Erreicht eine Multimedia Nachricht, welche mit Hilfe der Anwendungskennung als E-Mail gekennzeichnet ist, das mobile Teilnehmerendgerät, wird diese nicht als generischen MMS gehandhabt, sondern an einen gesonderten E-Mail Client des Teilnehmerendgeräts weitergeleitet, welcher die weitere Aufbereitung für den Nutzer übernimmt.

Wird eine Multimedia Nachricht mit der Anwendungskennung: "Email" vom Endgerät an den MMS Relay/Server übermittelt, so wird diese entsprechend behandelt und an die adressierten E-Mail Empfänger weitergeleitet.

Die Anwendungskennung: "E-Mail" kann erfindungsgemäß sowohl vom mobilen Teilnehmerendgerät, einem MMS Service Provider welcher als E-Mail Anwendungsserver agiert (MM7), als auch vom MMS Relay/Server (wenn eine Nachricht über das Internet (MM3) zum MMS Relay/Server übertragen wird) gesetzt werden.

Das Teilnehmerendgerät umfasst eine MMS Nutzeranwendung sowie eine MMS-externe Anwendung, die beispielsweise geeignet ist, die Anmeldungskennungen zu erkennen bzw. Nachrichten mit einer Anwendungskennung zu versehen, um das erfindungsgemäße Verfahren durchführen zu können.

Das Kommunikationssystem zum Übertragen von Nachrichten von einer Nutzeranwendung eines Teilnehmers mit Hilfe des Multimedia Message Service MMS zu einer Nutzeranwendung eines anderen Teilnehmers umfasst mindestens ein Netzelement, das nach dem erfindungsgemäßen Verfahren arbeitet, und ein Teilnehmerendgerät wie es im Rahmen der Erfindung beschrieben ist.

Nachfolgend wird die Erfindung anhand von Zeichnungsfiguren näher erläutert. Aus den Zeichnungen und ihrer Beschreibung ergeben sich weitere Merkmale und Vorteile der Erfindung.

Kurze Beschreibung der Zeichnungen
- Figur 1: zeigt eine Referenzarchitektur eines MMS-Systems;
- Figur 2: zeigt schematisch die erfindungsgemäße Übermittlung einer E-Mail von einem E-Mail Anwendungsserver über das MMS-System an Teilnehmerendgeräte.

### Beschreibung eines bevorzugten Ausführungsbeispiels der Erfindung

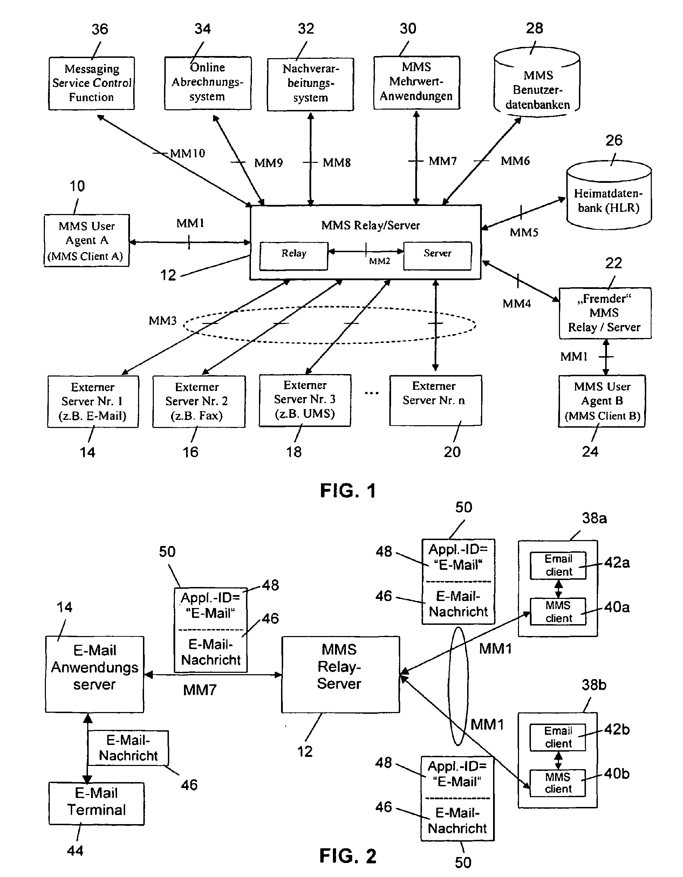

Figur 1 zeigt die grundsätzliche Architektur eines MMS-Systems und den verwendeten Schnittstellen zwischen den einzelnen Elementen des MMS-Systems.

Eine erste Schnittstelle MM1 wird verwendet, um Multimedia Nachrichten von einer MMS Nutzeranwendung 10, auch bezeichnet als MMS User Agent oder MMS Client, die auf einem Teilnehmerendgerät ausgeführt wird, an die zentrale Einheit, den MMS Relay/Server 12 zu übermitteln und umgekehrt. Die MMS Nutzeranwendung 10 ist eine Funktion einer Anwendungsschicht, durch welche der Benutzer Multimedia Nachrichten erstellen, ansehen oder bearbeiten kann. Der MMS Relay/Server ist verantwortlich für die Speicherung und die Weiterleitung von eingehenden und ausgehenden Multimedia Nachrichten und die Übermittlung der Nachrichten zwischen verschiedenen Kommunikationssystemen.

Die Schnittstelle MM2 ist eine interne Schnittestelle des MMS Relay/Servers 12.

Die Schnittstelle MM3 dient zur Übermittlung von Multimedia Nachrichten zwischen dem MMS Relay/Server 12 und Servern externer Kommunikations-und Nachrichtensysteme, beispielsweise einem externen E-Mail Server 14, einem externen Fax Server 16, einem externen UMS Server 18 oder anderen externen Servern 20.

Die Schnittstelle MM4 dient zur Übermittlung von Multimedia Nachrichten zwischen MMS Relay/Servern 12 bzw. 22 verschiedener Kommunikationssysteme. Beispielsweise kann der fremde MMS Relay/Server 22 zuständig sein für die Übermittlung von Nachrichten an eine weitere MMS Nutzeranwendung 24.

Die Schnittstelle MM5 dient zur Kommunikation zwischen dem MMS Relay/Server 12 und einem Teilnehmerregister, beispielsweise der Heimatdatenbank HLR 26. In dieser Heimatdatenbank 26 sind Teilnehmerdaten gespeichert, die für die Übermittlung von Multimedia Nachrichten notwendig sind.

Die Schnittstelle MM6 ist eine Verbindung zwischen dem MMS Relay/Server 12 und verschiedenen MMS Benutzerdatenbanken 28.

Die Schnittstelle MM7 wird verwendet zur Übermittlung von Multimedia Nachrichten vom MMS Relay/Server 12 zu MMS Mehrwertanwendungen 30 und umgekehrt. Diese Mehrwertanwendungen oder Mehrwertdienste 30 sind Zusatzdienste des MMS Providers oder von Dritten, beispielsweise kostenpflichtige Download-Dienste für Bilder, Videos oder Musikdateien.

Die Schnittstelle MM8 wird verwendet zur Übermittlung von Verbindungsdaten zwischen dem MMS Relay/Server 12 und einem Nachverarbeitungssystem des MMS Providers 32.

Die Schnittstelle MM9 wird verwendet zur Übermittlung von Nachrichten zwischen dem MMS Relay/Server 12 und einem Online-Abrechnungssystem 34.

Die Schnittstelle MM10 dient zur Übermittlung von MMS spezifischen Informationen zwischen dem MMS Relay/Server 12 und einer externen Messaging Service Control Function MSCF, also einem Nachrichten-Dienste-Kontroll-Punkt 36, in welchem beispielsweise eine Rufnummernumsetzung durchgeführt wird.

In einem MMS-System war es bisher zwar möglich, dass ein MMS Client 10 eine E-Mail von einem externen Server 14 empfängt, wobei diese E-Mail vom externen Server 14 zunächst an einen MMS Relay/Server 12 übermittelt wird, dort in ein MMS spezifisches Format konvertiert wird und dann an die MMS Nutzeranwendung 10 übermittelt wird.

Figur 2 zeigt ein Beispiel der Übermittlung einer E-Mail Nachricht mittels des erfindungsgemäßen Verfahrens. Ein externer E-Mail Anwendungsserver 14 ist über die MM7-Schnittstelle mit dem MMS Relay/Server 12 verbunden. Das heißt, der externe E-Mail Server ist als Mehrwertanwendung an das MMS-System angebunden. Der MMS Relay/Server 12 bedient mehrere MMS Teilnehmer. Jeder MMS Teilnehmer verfügt über ein Teilnehmerendgerät 38a, 38b, welches zum einen eine MMS Nutzeranwendung 40a, 40b sowie eine E-Mail Nutzeranwendung 42a und 42b umfasst. Die MMS Nutzeranwendungen 40a und 40b sind über die MM1-Schnittstelle mit dem Relay/Server 12 kommunikativ verbunden.

Es wird angenommen, dass von einem E-Mail-Terminal 44 eine E-Mail-Nachricht 46 an einen oder beide MMS Teilnehmerengeräte 38a bzw. 38b übermittelt werden soll. Die E-Mail 46 wird vom E-Mail Terminal 44 zunächst über ein entsprechendes für E-Mail verwendet Übertragungs- bzw. Transportprotokoll, z. B. SMTP, zum E-Mail-Anwendungsserver 14 übermittelt. Dort wird festgestellt, dass die E-Mail für MMS Teilnehmerengeräte bestimmt ist. Die E-Mail wird daher vom E-Mail Anwendungsserver 14 an den MMS Relay/Server 12 übermittelt. Dort wird der E-Mail Nachricht 46 erfindungsgemäß eine eigene Anwendungskennung 48 zugeordnet, und die durch die Anwendungskennung 48 gekennzeichnete E-Mail Nachricht 46 in eine MMS Nachricht 50 verpackt. Die MMS Nachricht 50 dient also als Transportcontainer für die E-Mail Nachricht 46. Diese spezielle MMS Nachricht 50, welche die E-Mail Nachricht 46 und die zugeordnete Anwendungskennung 48 enthält, wird vom MMS Relay/Server 12 an die Teilnehmerengeräte 38a bzw. 38b weiterleitet. Die spezielle Nachricht 50 wird zunächst von der MMS Nutzeranwendung 40a bzw. 40b des jeweiligen Teilnehmers empfangen. Anhand der Anwendungskennung 48 erkennt die MMS Nutzeranwendung 40a bzw. 40b, dass diese MMS Nachricht 50 nicht als generische MMS Nachricht gehandhabt werden soll, sondern eine E-Mail 46 beinhaltet, die an eine E-Mail Anwendung weiterzuleiten ist. Die MMS Nutzeranwendung 40a, 40b leitet diese MMS Nachricht 50 an eine entsprechende E-Mail Nutzeranwendung 42a, 42b weiter, welche die weitere Aufbereitung der E-Mail-Nachricht 46 für den Nutzer übernimmt.

Für den Fall einer von den Teilnehmerengeräten 38a, 38b abgehenden E-Mail Nachricht wird genauso verfahren. Die E-Mail Nachricht wird von der E-Mail Nutzeranwendung and die MMS Nutzeranwendung übergeben, dort durch eine Anwendungskennung gekennzeichnet und in eine MMS Nachricht verpackt, die dann über das MMS-System übermittelt wird. Die MMS Nachricht wird nicht als solche behandelt, sondern an den adressierten E-Mail Empfänger weitergeleitet und dort durch eine entsprechende E-Mail-Anwendung aufbereitet.

### Liste der Bezugszeichen

| | |
|---|---|
| 10 | MMS Nutzeranwendung A |
| 12 | MMS Relay/Server |
| 14 | Externer E-Mail Server |
| 16 | Externer Server |
| 18 | Externer Server |
| 20 | Externer Server |
| 22 | Fremder MMS Relay/Server |
| 24 | MMS Nutzeranwendung B |
| 26 | Heimatdatenbank HLR |
| 28 | MMS Benutzerdatenbanken |
| 30 | MMS Mehrwertanwendungen |
| 32 | Nachverarbeitungssystem |
| 34 | Online Abrechnungssystem |
| 36 | Messaging Service Control Function |
| 38a, 38b | Teilnehmerendgerät |
| 40a, 40b | MMS Nutzeranwendung |
| 42a, 42b | E-Mail Nutzeranwendung |
| 44 | E-Mail Terminal |
| 46 | E-Mail Nachricht |
| 48 | Anwendungskennung |
| 50 | MMS Nachricht |

## Patentansprüche

1. Verfahren zur Übertragung von Nachrichten (46) von einer Nutzeranwendung (10) eines Teilnehmers mit Hilfe des Multimedia Message Service MMS zu einer Nutzeranwendung (44) eines anderen Teilnehmers, wobei die Nachricht (46) in einem Format einer externen Anwendung vorliegt und als solche durch eine Anwendungskennung (48) gekennzeichnet wird, die zusammen mit der Nachricht (46) übertragen wird, wobei der Multimedia Message Service von der externen Anwendung als Transportsystem zur Übertragung der Nachricht verwendet wird, indem die Nachricht (46) von einem Netzelement (12) des Multimedia Message Service anhand der Anwendungskennung (48) als solche identifiziert und unverändert mittels einer MMS Nachricht (50) über den Multimedia Message Service übertragen und an die externe Anwendung (42a, 42b) weitergeleitet wird, **dadurch gekennzeichnet, dass** eine durch die Anmeldungskennung (48) klassifizierte Nachricht (46) von einer E-Mail Nutzeranwendung (42a, 42b) eines Teilnehmers über den Multimedia Message Service an das Netzelement (12) des Multimedia Message Service übertragen wird, dort anhand der Anwendungskennung (48) als Nachricht im Format einer externe Anwendung erkannt und nicht als generische MMS Nachricht behandelt wird, sondern an einen E-Mail Anwendungsserver (14) und weiter an einen adressierten Empfänger übertragen wird.

2. Verfahren nach Anspruch 1, **dadurch gekennzeichnet, dass** als externe Anwendung eine E-Mail Anwendung (42a, 42b) verwendet wird.

3. Verfahren nach einem der Ansprüche 1 oder 2, **dadurch gekennzeichnet, dass** die Anwendungskennung (48) in einem Nachrichtenkopf (Header) der MMS Nachricht (50) gespeichert wird.

4. Verfahren nach einem der Ansprüche 1 bis 3, **dadurch gekennzeichnet, dass** die durch die Anmeldungskennung (48) klassifizierte E-Mail Nachricht (46) von einem E-Mail Anwendungsserver (14) an das Netzelement des Multimedia Message Service übertragen wird, dort als Nachricht im Format einer externe Anwendung erkannt und in der MMS Nachricht (50) über den Multimedia Message Service an eine E-Mail Nutzeranwendung (42a, 42b) eines Teilnehmers übertragen wird.

5. Verfahren nach einem der Ansprüche 1 bis 4, **dadurch gekennzeichnet, dass** die Nachricht (50) auf ein oder von einem Teilnehmerendgerät (38a, 38b) übertragen wird.

6. Verfahren nach Anspruch 5, **dadurch gekennzeichnet, dass** als Teilnehmerendgerät (38a, 38b) ein mobiles Teilnehmerendgerät verwendet wird, auf welchem die externe Anwendung ausgeführt wird.

7. Teilnehmerendgerät (38a, 38b) zum Senden und/oder Empfangen von Nachrichten (46, 50) mit Hilfe des Multimedia Message Service, welches eine MMS Nutzeranwendung (40a, 40b) und eine externe Anwendung (42a, 42b) umfasst und zur Durchführung des Verfahrens gemäß den Ansprüchen 1 bis 6 ausgebildet ist.

8. Teilnehmerendgerät nach Anspruch 7, **dadurch gekennzeichnet, dass** die externe Anwendung (42a, 42b) eine E-Mail Anwendung ist.

9. Teilnehmerendgerät nach Anspruch 7, **dadurch gekennzeichnet, dass** das Teilnehmerendgerät (38a, 38b) ein mobiles Teilnehmerendgerät ist.

10. Kommunikationssystem zum Übertragen von Nachrichten (46, 50) von einer Nutzeranwendung (42a, 42b) eines Teilnehmers mit Hilfe des Multimedia Message Service MMS zu einer Nutzeranwendung eines anderen Teilnehmers, wobei es mindestens ein Netzelement (12) umfasst, das nach dem Verfahren der Ansprüche 1 bis 6 arbeitet, und es mindestens ein Teilnehmerendgerät (38a, 38b) umfasst, das nach einem der Ansprüche 7 bis 9 arbeitet.

## Claims

1. Method for the transmission of messages (46) from a user application (10) of one subscriber by means of the multimedia message service MMS to a user application (44) of another subscriber, wherein the message (46) is in a format of an external application and is marked as such by an application code (48) which is transmitted together with the message (46), wherein the multimedia message service of the external application is used as a transport system for transmission of the message by the fact that the message (46) is identified as such by a network element (12) of the multimedia message service with the aid of the application code (48) and transmitted unchanged by means of an MMS message (50) via the multimedia message service and forwarded to the external application (42a, 42b), **characterised in that** a message (46) classified by the application code (48) is transmitted from an e-mail user application (42a, 42b) of one subscriber via the multimedia message service to the network element (12) of the multimedia message service, there recognised as a message in the format of an external application with the aid of the application code (48) and not treated as a generic MMS message, but transmitted to an e-mail application server (14) and on to a recipient who is being addressed.

2. Method according to claim 1, **characterised in that** an e-mail application (42a, 42b) is used as the external application.

3. Method according to one of claims 1 or 2, **characterised in that** the application code (48) is stored in a header of the MMS message (50).

4. Method according to one of claims 1 to 3, **characterised in that** the e-mail message (46) classified by the application code (48) is transmitted from an e-mail application server (14) to the network element of the multimedia message service, and there recognised as a message in the format of an external application and transmitted in the MMS message (50) via the multimedia message service to an e-mail user application (42a, 42b) of a subscriber.

5. Method according to one of claims 1 to 4, **characterised in that** the message (50) is transmitted to or from a subscriber terminal (38a, 38b).

6. Method according to claim 5, **characterised in that** a mobile subscriber terminal on which the external application is run is used as the subscriber terminal (38a, 38b).

7. Subscriber terminal (38a, 38b) for sending and/or receiving messages (46, 50) by means of the multimedia message service, which comprises an MMS user application (40a, 40b) and an external application (42a, 42b) and is designed for carrying out the method according to claims 1 to 6.

8. Subscriber terminal according to claim 7, **characterised in that** the external application (42a, 42b) is an e-mail application.

9. Subscriber terminal according to claim 7, **characterised in that** the subscriber terminal (38a, 3 8b) is a mobile subscriber terminal.

10. Communications system for transmitting messages (46, 50) from a user application (42a, 42b) of one subscriber by means of the multimedia message service MMS to a user application of another subscriber, wherein it comprises at least one network element (12) which works by the method of claims 1 to 6, and it comprises at least one subscriber terminal (38a, 38b) which works according to one of claims 7 to 9.

## Revendications

1. Procédé pour transmettre des messages (46) d'une application d'utilisateur (10) d'un abonné, à l'aide du Service de messagerie multimédia MMS, vers une application d'utilisateur (44) d'un autre abonné, étant précisé que le message (46) existe dans un format d'une application externe et est caractérisé comme tel par une identification d'application (48) qui est transmise avec le message (46), étant précisé que le Service de messagerie multimédia est utilisé par l'application externe comme système de transport pour transmettre le message, le message (46) étant identifié comme tel par un élément de réseau (12) du Service de messagerie multimédia à l'aide de l'identification d'application (48) et étant transmis, inchangé, à l'aide d'un message MMS (50) par l'intermédiaire du Service de messagerie multimédia et retransmis à l'application externe (42a, 42b), **caractérisé en ce qu'**un message (46) classé par l'identification d'application (48) est transmis par une application d'utilisateur de messagerie électronique (42a, 42b) d'un abonné, par l'intermédiaire du Service de messagerie multimédia, à l'élément de réseau (12) dudit Service de messagerie multimédia, où il est reconnu à l'aide de l'identification d'application (48) comme un message dans le format d'une application externe, et n'est pas traité comme un message MMS générique, mais est transmis à un serveur d'application de messagerie électronique (14) et retransmis à un destinataire auquel il est adressé.

2. Procédé selon la revendication 1, **caractérisé en ce qu'**on utilise comme application externe une application de messagerie électronique (42a, 42b).

3. Procédé selon l'une des revendications 1 ou 2, **caractérisé en ce que** l'identification d'application (48) est stockée dans un en-tête de message du message MMS (50).

4. Procédé selon l'une des revendications 1 à 3, **caractérisé en ce que** le message de messagerie électronique (46) classé par l'identification d'application (48) est transmis par un serveur d'application de messagerie électronique (14) à l'élément de réseau du Service de messagerie multimédia, où il est reconnu comme un message dans le format d'une application externe, et est transmis dans le message MMS (50), par l'intermédiaire du Service de messagerie multimédia, à une application d'utilisateur de messagerie électronique (42a, 42b) d'un abonné.

5. Procédé selon l'une des revendications 1 à 4, **caractérisé en ce que** le message (50) est transmis à un terminal d'abonné (38a, 38b) ou à partir de celui-ci.

6. Procédé selon la revendication 5, **caractérisé en ce qu'**on utilise comme terminal d'abonné (38a, 38b) un terminal d'abonné mobile sur lequel l'application externe est exécutée.

7. Terminal d'abonné (38a, 38b) pour envoyer et/ou recevoir des messages (46, 50) à l'aide du Service de messagerie multimédia, qui comprend une application d'utilisateur MMS (40a, 40b) et une application externe (42a, 42b) et qui est conçu pour mettre en oeuvre le procédé selon les revendications 1 à 6.

8. Terminal d'abonné selon la revendication 7, **caractérisé en ce que** l'application externe (42a, 42b) est une application de messagerie électronique.

9. Terminal d'abonné selon la revendication 7, **caractérisé en ce que** le terminal d'abonné (38a, 38b) est un terminal d'abonné mobile.

10. Système de communication pour transmettre des messages (46) d'une application d'utilisateur (42a, 42b) d'un abonné, à l'aide du Service de messagerie multimédia MMS, vers une application d'utilisateur d'un autre abonné, étant précisé qu'il comprend au moins un élément de réseau (12) qui fonctionne selon le procédé des revendications 1 à 6, et qu'il comprend au moins un terminal d'abonné (38a, 38b) qui fonctionne selon l'une des revendications 7 à 9.
